# NEW EUROPEAN PATENT SPECIFICATION

(11) **EP 2 114 668 B2**
(45) Date of publication and mention of the opposition decision: **08.03.2017**
(45) Mention of the grant of the patent: 17.10.2012
(21) Application number: 07856724.5
(22) Date of filing: 14.12.2007
(51) Int. Cl.: B32B 15/01, F16C 9/00, F16C 33/12, C25D 7/10

(54) **SLIDING BEARING**
GLEITLAGER
PALIER LISSE

(30) Priority: 19.12.2006 WO PCT/EP2006/012230
(43) Date of publication of application: 11.11.2009
(73) Proprietor: MAHLE International GmbH, 70376 Stuttgart (DE)
(72) Inventor: KNOBLAUCH, Christiane, 70619 Stuttgart (DE); RIZZO, Lucia Beatriz de, Sao Paulo, SP (BR); SARABANDA, Jose Valentim Lima, Sao Paulo, SP (BR)
(74) Representative: Stumkat, Ulrich
(86) International application number: PCT/EP2007/010983
(87) International publication number: WO 2008/074439

(56) References cited:
- EP-A2- 1 113 180
- WO-A-99/41512
- DE-A1- 10 054 461
- DE-A1- 10 337 030
- DE-A1- 19 754 221
- DE-C1- 4 211 642
- DE-C2- 19 728 777
- GB-A- 2 156 011

## Description

### Field of invention

The present invention refers to a sliding bearing comprising a back metal layer, a bearing layer applied to the back metal layer, a diffusion barrier layer applied to the bearing layer, and an overlay applied to the diffusion barrier layer.

### Background art

Sliding bearings manufactured as lead free composite multilayer bearings are demanded for launching of new engines, especially for medium to heavy duty engine applications. This demand goes worldwide as it is difficult to consider the development of world platforms with variations of internal components for captive markets.

A common solution being developed to the medium and heavy duty market is a composite sliding bearing based on a multilayer construction that comprises a steel backing, a lead free copper based bearing layer, an intermediate layer or diffusion barrier layer and a lead free tin-based overlay. Such bearing system is relatively close to the existing lead containing system and attempts to preserve some important functional properties of the bearings system, like the conformability and embedability given by the soft tin-based overlay with relatively preserved fatigue strength and the emergency running property of the bearing layer for the protection of the engine in the case that the overlay is completely worn out in operation. This kind of sliding bearing is for example described in the German patent application DE 103 37 030 A1.

A problem with regard to this kind of sliding bearing is the control of the tin migration or diffusion from the overlay to the copper based bearing layer that gives rise to a brittle intermetallic phase of copper-tin that leads to spalling of the overlay and seriously jeopardize the bearing load carrying capacity. DE 103 37 030 A1 discloses a diffusion barrier layer located between the overlay and the bearing layer which comprises a pure nickel layer with a thickness of 4 to 6 µm.

German Patent DE 42 11 642 C1 discloses a method for manufacturing a layer material for sliding bearings comprising a silver layer used as adhesive layer between the bearing layer and the overlay.

International patent publication WO 99/41512 A1 discloses a plain bearing comprising a silver layer used as sliding layer and further comprising a nickel layer used as diffusion barrier layer between the silver layer and the bearing layer, as defined by the preambles of claims 1 and 2.

### Object of the invention

It is the object of the present invention to provide a lead free sliding bearing with a tin-based overlay, which exhibits an effective control of the tin migration or diffusion from the tin-based overlay to the bearing layer. A further object of the present invention is to provide a lead free sliding bearing with a tin-based overlay, having a good conformability and good embedability properties for foreign particles during the running-in period and high load carrying capacity of the medium, especially to heavy duty engines.

### Summary of the invention

The object of the present invention is achieved by a sliding bearing with a copper-based bearing layer, a diffusion barrier layer which consists of one pure iron layer applied to the bearing layer and one silver-based layer applied to the pure iron layer as defined in independent claim 1. The object of the present invention is also achieved by a sliding bearing with a copper-based bearing layer, a diffusion barrier layer which consists of one pure nickel layer applied to the bearing layer, one layer of a tin/nickel alloy applied to the pure nickel layer and one silver-based layer applied to the layer of a tin/nickel alloy as defined in independent claim 2.

### Brief Description of Drawings

Figure 1 shows a cross-section of a first embodiment of a sliding bearing according to the present invention just after manufacturing.
Figure 2 shows a cross-section of a first embodiment of a sliding bearing according to the present invention after operating or after heat treatment.

### Detailed description of the invention

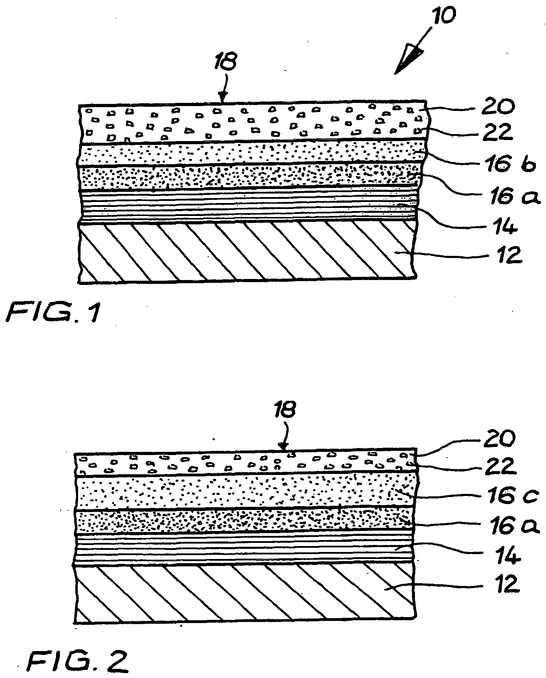

Figure 1 shows a cross-section of a preferred embodiment of a sliding bearing 10 according to the present invention. This preferred embodiment of the sliding bearing 10 comprises a back metal layer 12, preferably made of steel, a copper-based bearing layer 14 which is for example based on a copper-tin alloy or copper-tin-nickel alloy or copper-tin-bismuth alloy or copper-tin-bismuth-nickel alloy, having a copper content of at least 85 wt%, a diffusion barrier layer consisting of two layers 16a and 16b and a tin-based overlay 18.

The overlay 18 of the present invention comprises pure tin or tin and one or more elements selected form the group comprising copper, silver, nickel, cobalt, zinc, gold, bismuth, or indium, preferably in a total amount of maximum 20% by weight. Tin is the main component of the overlay.

The diffusion barrier layer consists of a first layer 16a applied on the bearing layer 14. The first layer 16a is made of pure iron. The first layer 16a can further be made of a layer consisting of pure nickel applied to the bearing layer 14 and of a layer consisting of a tin/nickel alloy applied on the pure nickel layer (not shown in the drawings). The diffusion barrier layer further consists of a second layer 16b. The second layer 16b is manufactured by applying a silver-based layer, preferably a pure silver layer as shown in figure 1, onto the surface of the first layer 16a, for example made of pure nickel. In a further embodiment (not shown) the second layer 16b consists of silver with up to 30 weight % in total of one or more elements selected from the group consisting of tin, lead, cadmium and zinc. Instead or additionally, the second layer 16b contains up to 2 weight % in total of one or more elements selected from the group consisting of antimony, iron, cobalt and nickel.

During operation of the sliding bearing for example in a combustion engine, or by heat treatment of the sliding bearing before operation, a diffusion of tin from the overlay 18 to the second layer 16b of the diffusion barrier layer takes place. Therefore, during operating, the second layer 16b is gradually transformed into a silver-tin layer 16c (see figure 2), mostly comprising of Ag₃Sn that replaces the layer 16b and has an increased thickness compared with the second layer 16b. Therefore, the diffusion of tin into the bearing layer 14 is effectively prevented. In addition this silver-tin layer 16c formed by diffusion of tin of the overlay 18 into the second intermediate layer 16b enhances the bonding between the diffusion barrier layer 16a plus 16c and the overlay 18. Further, the silver-tin layer 16c functions as an effective sliding layer in case that the overlay 18 is worn out completely.

In another embodiment of the invention, the sliding bearing is submitted to a heat treatment before operation. In this case the diffusion process of tin of the overlay 18 to the silver based layer 16b and the formation of the continuous silver-tin layer 16c takes place before operation. Preferably, at least 90% of the silver layer 16b is transformed into the silver-tin layer 16c. Such a heat treatment before operation is preferably done when the silver based overlay 16b is thicker than about 2 µm, because it is possible that a silver based overlay thicker than 2 µm is not completely transformed to Ag₃Sn when the transformation occurs only during operation. The heat treatment can preferably be performed at temperatures between 130°C and 200°C. The duration of the heat treatment depends on the temperature and the thickness of the silver based layer 16b. Higher thickness of the silver based layer 16b needs higher temperature or longer duration of heat treatment (see examples in table 1 for values of time and temperature needed for the transformation of a silver based overlay 16b into a Ag₃Sn-overlay 16c). A very long heat treatment is not preferable with regard to the costs. High temperatures also are not preferable due to the risk of further diffusion processes causing embrittlement of the layers. A too low temperature, for example 100°C is not preferred, because in this case the transformation takes much more time. Also it is not preferable to transform a too small part of the silver based layer 16b, preferably less than 90%, into the Ag₃Sn-overlay 16c, because the remaining silver may be corroded, causing the failure of the bearing as a consequence. The heat treatment is preferably performed with the following parameters as shown in table 2.

For these reasons the silver based layer16b preferably has a thickness of 1 to 5 µm. Thick layers 16b take much more time for the transformation into the Ag₃Sn layer 16c. Thin layers 16b might be not tight enough and therefore less effective.

**Table 1: Thickness of Ag₃Sn-layer 16c formed by diffusion of Sn from the overlay 18 into the silver based layer 16b. Values are given in µm.**

| time | no heat treatment | 100°C | 150°C | 200°C |
|---|---|---|---|---|
| | 0,3 | | | |
| 1 h | | | 0,5 | 1,4 |
| 2 h | | | 0,7 | |
| 5 h | | | 0,8 | 2,9 |
| 10 h | | 0,5 | 1,1 | 5 |
| 15 h | | | 1,4 | |
| 20 h | | 0,6 | 1,5 | |
| 50 h | | 0,6 | | |
| 116 h | | | 5 | 10 |

**Table 2: Preferred heat treatment for transformation of silver based layer 16b of a certain thickness**

| Thickness of layer 16b | Heat treatment |
|---|---|
| ip to 1,5 µm | 150°C, 10 h |
| 1,5 to µm | 200°C, 5 h |
| 3 to 5 µm | 200°C, 10h |

For both embodiments - with or without heat treatment before operation - the silver-tin layer 16c is formed regardless of the composition of the tin-based overlay 18. Preferably, the overlay 18 contains not more than about 20 weight % in total of alloying elements. In case that the tin-based overlay 18 contains more than 20 weight % of alloying elements, the duration of formation of the silver-tin layer 16c is longer because the diffusion of tin from the overlay 18 to the silver based layer 16b is slower. Therefore, the present invention is useful with regard to every tin-based overlay 18, but preferably with an amount of alloying elements less than 20 wt%.

Preferably the silver-tin layer 16c can be described as the ε-phase of a tin-silver binary phase with a compound description as Ag₃Sn and characterized by X-ray diffraction.

The presence of the silver-tin layer 16c that is formed by gradual transformation of the second layer 16b decreases the diffusion of tin to the first layer 16a and the bearing layer 14 hindering the formation of a brittle copper-tin phase at the interface of a copper-based bearing layer 14. As it is known from the prior art, such embrittlement process leads to overlay spalling or to serious degradation of its fatigue resistance. With the formation of a continuous silver-tin layer by transformation of the second layer 16b on the top of the first layer 16a, it was observed a strong decrease of the tin migration to the first layer 16a. The silver-tin layer 16c obviously becomes an efficient diffusion controlling barrier.

An other function of a continuous silver-tin layer 16c is to become itself a hard high wear resistant sliding layer with improved scuffing and fatigue resistance after the worn out of the softer tin-based overlay 18.

Eventually, at the loaded areas of heavy duty applications there may happen a fatigue wear process of the tin-based overlay 18a with the exposure of the silver-tin layer 16c. Under such condition, the hard, highly seizure and fatigue resistant silver-tin layer 16c gives an enduring full protection to the bearing operation. The preservation of the tin-based overlay 18a at the regions less loaded gives a continuous embedability and represents a protection against wear of the silver-tin layer 16c exposed at the loaded area.

## Claims

1. Sliding bearing (10) comprising a back metal layer (12), a bearing layer (14) applied to the back metal layer (12), a diffusion barrier layer (16) applied to the bearing layer (14) and an overlay (18) applied to the diffusion barrier layer (16), wherein the bearing layer (14) is a copper-based bearing layer, **characterized in that** the diffusion barrier layer (16) consists of one pure iron layer (16a) applied to the bearing layer (14) and one silver-based layer (16b) applied to the pure iron layer (16a), and that tin is the main component of the overlay (18), that the overlay (18) comprises pure tin or tin with one or more elements selected from the group consisting of copper, silver, nickel, cobalt, zinc, gold, bismuth or indium and that the overlay (18) has at least the same thickness as the silver-based layer (16b).

2. Sliding bearing (10) comprising a back metal layer (12), a bearing layer (14) applied to the back metal layer (12), a diffusion barrier layer (16) applied to the bearing layer (14) and an overlay (18) applied to the diffusion barrier layer (16), wherein the bearing layer (14) is a copper-based bearing layer, **characterized in that** the diffusion barrier layer (16) consists of one pure nickel layer (16a) applied to the bearing layer (14), one layer of a tin/nickel alloy applied to the pure nickel layer and one silver-based layer (16b) applied to the layer of the tin/nickel alloy, and that tin is the main component of the overlay (18), that the overlay (18) comprises pure tin or tin with one or more elements selected from the group consisting of copper, silver, nickel, cobalt, zinc, gold, bismuth or indium and that the overlay (18) has at least the same thickness as the silver-based layer (16b).

3. Sliding bearing according to claim 1 or 2, **characterized in that** the silver-based layer (16b) contains pure silver.

4. Sliding bearing according to any one of claims 1 to 2, **characterized in that** the silver-based layer (16b) contains silver and one or more elements selected from the group consisting of tin, cadmium and zinc preferably in an amount of up to 30 weight %.

5. Sliding bearing according to any of claims 1, 2 or 4, **characterized in that** the silver-based layer (16b) contains silver and one or more elements selected from the group consisting of antimony, iron, cobalt and nickel, preferably in an amount of up to 2 weight %.

6. Sliding bearing according to anyone of claims 1 to 5, **characterized in that** the thickness of the silver-based layer (16b) is from 0.5 to 10.0 µm, preferably from 1.0 to 5.0 µm.

7. Sliding bearing according to any one of claims 1 to 6, **characterized in that** the thickness of the overlay (18) is from 2.0 to 30.0 µm.

8. Sliding bearing according to any one of claims 1 to 7, **characterized in that** the silver-based layer (16b) contains a silver-tin intermetallic phase.

9. Sliding bearing according to any of claims 1 to 8, **characterized in that** the overlay (18) contains the one or more elements in a total amount of 20 wt%.

10. Sliding bearing according to any of claims 1 to 9, **characterized in that** the bearing layer (14) has a copper content of at least 85 wt%.

11. Sliding bearing according to any of claims 1 to 10, **characterized in that** the bearing layer (14) further contains tin and/or nickel and/or bismuth.

12. Use of a sliding bearing according to any of claims 1 to 11 in a combustion engine.

## Patentansprüche

1. Gleitlager (10), eine rückseitige Metallschicht (12), eine tragende Schicht (14), die auf die rückseitige Metallschicht (12) aufgebracht ist, eine diffusionshindernde Schicht (16), die auf die tragende Schicht (14) aufgebracht ist, und eine Deckschicht (18) aufweisend, die auf die diffusionshindernde Schicht (16) aufgebracht ist, wobei die tragende Schicht (14) eine kupferhaltige tragende Schicht ist, **dadurch gekennzeichnet, dass** die diffusionshindernde Schicht (16) aus einer auf die tragende Schicht (14) aufgebrachten reinen Eisenschicht (16a) und einer auf die reine Eisenschicht (16a) aufgebrachten silberhaltigen Schicht (16b) besteht, dass Zinn der Hauptbestandteil der Deckschicht (18) ist, dass die Deckschicht (18) reines Zinn oder Zinn mit einem oder mehreren Elementen umfasst, die ausgewählt sind aus der Gruppe bestehend aus Kupfer, Silber, Nickel, Cobalt, Zink, Gold, Bismut oder Indium und dass die Deckschicht (18) zumindest dieselbe Dicke aufweist wie die silberhaltige Schicht (16b).

2. Gleitlager (10), eine rückseitige Metallschicht (12), eine tragende Schicht (14), die auf die rückseitige Metallschicht (12) aufgebracht ist, eine diffusionshindernde Schicht (16), die auf die tragende Schicht (14) aufgebracht ist, und eine Deckschicht (18) aufweisend, die auf die diffusionshindernde Schicht (16) aufgebracht ist, wobei die tragende Schicht (14) eine kupferhaltige tragende Schicht ist, **dadurch gekennzeichnet, dass** die diffusionshindernde Schicht (16) aus einer auf die tragende Schicht (14) aufgebrachten reinen Nickelschicht (16a), einer Schicht aus einer Zinn-Nickel-Legierung, die auf die reine Nickelschicht aufgebracht ist, und einer auf die Zinn-Nickel-Legierung aufgebrachten silberhaltigen Schicht (16b) besteht, und dass Zinn der Hauptbestandteil der Deckschicht (18) ist, dass die Deckschicht (18) reines Zinn oder Zinn mit einem oder mehreren Elementen umfasst, die ausgewählt sind aus der Gruppe bestehend aus Kupfer, Silber, Nickel, Cobalt, Zink, Gold, Bismut oder Indium und dass die Deckschicht (18) zumindest dieselbe Dicke aufweist, wie die silberhaltige Schicht (16b).

3. Gleitlager nach einem der Ansprüche 1 oder 2, **dadurch gekennzeichnet, dass** die silberhaltige Schicht (16b) reines Silber enthält.

4. Gleitlager nach einem der Ansprüche 1 oder 2, **dadurch gekennzeichnet, dass** die silberhaltige Schicht (16b) Silber und eines oder mehrere Elemente aufweist, die ausgewählt sind aus der Gruppe bestehend aus Zinn, Cadmium und Zink, vorzugsweise in einer Menge von bis zu 30 Gew.-%.

5. Gleitlager nach einem der Ansprüche 1, 2 oder 4, **dadurch gekennzeichnet, dass** die silberhaltige Schicht (16b) Silber und eines oder mehrere Elemente aufweist, die ausgewählt sind aus der Gruppe bestehend aus Antimon, Eisen, Cobalt und Nickel, vorzugsweise in einer Menge von bis zu 2 Gew.-%.

6. Gleitlager nach einem der Ansprüche 1 bis 5, **dadurch gekennzeichnet, dass** die Dicke der silberhaltigen Schicht (16b) 0,5 bis 10,0 µm, vorzugsweise 1,0 bis 5,0 µm beträgt.

7. Gleitlager nach einem der Ansprüche 1 bis 6, **dadurch gekennzeichnet, dass** die Dicke der Deckschicht (18) 2,0 bis 30,0 µm beträgt.

8. Gleitlager nach einem der Ansprüche 1 bis 7, **dadurch gekennzeichnet, dass** die silberhaltige Schicht (16b) eine intermetallische Silber-Zinn-Phase enthält.

9. Gleitlager nach einem der Ansprüche 1 bis 8, **dadurch gekennzeichnet, dass** die Deckschicht (18) das eine oder die mehreren Elemente in einer Gesamtmenge von 20 Gew.-% aufweist.

10. Gleitlager nach einem der Ansprüche 1 bis 9, **dadurch gekennzeichnet, dass** die tragende Schicht (14) einen Kupfergehalt von mindestens 85 Gew.-% aufweist.

11. Gleitlager nach einem der Ansprüche 1 bis 10, **dadurch gekennzeichnet, dass** die tragende Schicht (14) ferner Zinn und/oder Nickel und/oder Bismut enthält.

12. Verwendung eines Gleitlagers nach einem der Ansprüche 1 bis 11 in einem Verbrennungsmotor.

## Revendications

1. Palier lisse (10) comprenant une couche métallique postérieure (12), une couche de support (14) appliquée sur la couche métallique postérieure (12), une couche barrière de diffusion (16) appliquée sur la couche de support (14) et un revêtement (18) appliqué sur la couche barrière de diffusion (16), la couche de support (14) étant une couche de support à base de cuivre, **caractérisé par le fait que** la couche barrière de diffusion (16) consiste en une couche de fer pur (16a) appliquée sur la couche de support (14) et une couche à base d'argent (16b) appliquée sur la couche de fer pur (16a) et que l'étain est le constituant principal de la revêtement (18), que le revêtement (18) comprend de l'étain pur ou de l'étain avec un ou plusieurs éléments choisis dans le groupe constitué par le cuivre, l'argent, le nickel, le cobalt, le zinc, l'or, le bismuth ou l'indium et que le revêtement (18) présente au moins la même épaisseur que la couche à base d'argent (16b).

2. Palier lisse (10) comprenant une couche métallique postérieure (12), une couche de support (14) appliquée sur la couche métallique postérieure (12), une couche barrière de diffusion (16) appliquée sur la couche de support (14) et un revêtement (18) appliqué sur la couche barrière de diffusion (16), la couche de support (14) étant une couche de support à base de cuivre, **caractérisé par le fait que** la couche barrière de diffusion (16) consiste en une couche de nickel pur (16a) appliquée sur la couche de support (14), une couche d'alliage étain/nickel appliquée sur la couche nickel pur et en une couche à base d'argent (16b) appliquée sur la couche d'alliage étain/nickel, et que l'étain est le constituant principal de la revêtement (18), et que le revêtement (18) comprend de l'étain pur ou de l'étain avec un ou plusieurs éléments choisis dans le groupe constitué par le cuivre, l'argent, le nickel, le cobalt, le zinc, l'or, le bismuth ou l'indium, et que le revêtement (18) présente au moins la même épaisseur que la couche à base d'argent (16b).

3. Palier lisse selon l'une des revendications 1 ou 2, **caractérisé par le fait que** la couche à base d'argent (16b) contient de l'argent pur.

4. Palier lisse selon l'une quelconque des revendications 1 ou 2, **caractérisé par le fait que** la couche à base d'argent (16b) contient de l'argent et un ou plusieurs éléments choisis dans le groupe constitué par l'étain, le cadmium et le zinc, de préférence dans une quantité allant jusqu'à 30% en poids.

5. Palier lisse selon l'une quelconque des revendications 1, 2 ou 4, **caractérisé par le fait que** la couche à base d'argent (16b) contient de l'argent et un ou plusieurs éléments choisis dans le groupe constitué par l'antimoine, le fer, le cobalt et le nickel, de préférence dans une quantité allant jusqu'à 2% en poids.

6. Palier lisse selon l'une quelconque des revendications 1 à 5, **caractérisé par le fait que** l'épaisseur de la couche à base d'argent (16b) va de 0,5 à 10,0 µm, de préférence de 1,0 à 5,0 µm.

7. Palier lisse selon l'une quelconque des revendications 1 à 6, **caractérisé par le fait que** l'épaisseur du revêtement (18) va de 2,0 à 30,0 µm.

8. Palier lisse selon l'une quelconque des revendications 1 à 7, **caractérisé par le fait que** la couche à base d'argent (16b) contient une phase intermétallique argent-étain.

9. Palier lisse selon l'une quelconque des revendications 1 à 8, **caractérisé par le fait que** le revêtement (18) contient le ou les éléments dans une quantité totale de 20% en poids.

10. Palier lisse selon l'une quelconque des revendications 1 à 9, **caractérisé par le fait que** la couche de support (14) a une teneur en cuivre d'au moins 85% en poids.

11. Palier lisse selon l'une quelconque des revendications 1 à 10, **caractérisé par le fait que** la couche de support (14) contient en outre de l'étain et/ou du nickel et/ou du bismuth.

12. Utilisation d'un palier lisse selon l'une quelconque des revendications 1 à 11 dans un moteur à combustion.
